# DEMANDE DE BREVET EUROPEEN

(11) **EP 0 557 144 A1**
(43) Date de publication de la demande: **25.08.1993**
(21) Numéro de dépôt: 93400189.2
(22) Date de dépôt: 26.01.1993
(51) Int. Cl.: F16B 21/18, G05D 23/02

(54) **Appareil avec organe de positionnement réciproque d'une tige et d'un logement cylindrique**

(30) Priorité: 30.01.1992 FR 9201426
(71) Demandeur: ROBINETTERIE, S.F.R., S.A., F-80390 Fressenneville (FR)
(72) Inventeur: Huveteau, Jean Louis, F-80130 Friville Escarbotin (FR)
(74) Mandataire: Ecrepont, Robert

(57) **Abrégé**

L'invention se rapporte à un organe (15) de positionnement réciproque dans un appareil (1) d'une tige (13) et d'un logement cylindrique.

Il est caractérisé en ce que :
- d'une part, au lieu d'un anneau élastique en forme de rondelle fendue, l'organe est formé à partir d'un tronçon d'élément allongé conformé de manière à former distinctement un anneau ouvert externe coopérant avec le manchon (4 ou 5) et des moyens internes coopérant avec la tige (13), et
- d'autre part, l'élément allongé se présente sous la forme d'une bande large dont la largeur est disposée dans le sens de l'épaisseur de l'organe de positionnement pour assurer un bon guidage de la tige.

## Description

L'invention se rapporte à un organe de positionnement réciproque dans un appareil d'une tige et d'un logement cylindrique et à l'appareil dont au moins une tige est positionnée par rapport à un logement cylindrique à l'aide d'un tel organe.

Elle s'applique plus particulièrement mais non exclusivement aux appareils de robinetterie et notamment aux robinets commandés par une sonde thermostatique.

Les appareils de robinetterie comprennent classiquement un corps abritant une chambre dans laquelle débouchent au moins trois manchons dont deux manchons reliés l'un à l'entrée et l'autre à la sortie du fluide et un troisième manchon logeant les moyens de tarage et de commande d'un clapet qui, pour contrôler la circulation du fluide entre la chambre et l'un des manchons respectivement d'entrée et de sortie, se déplace sensiblement perpendiculairement à un siège porté par le corps à l'extrémité interne du manchon correspondant.

Pour une commande d'un tel robinet par une sonde thermostatique, généralement, on utilise une sonde qui a la forme d'une tige dont une partie extrême pénètre dans le corps et notamment dans le manchon jusqu'à ce que, selon la température détectée, la sonde ait son extrémité qui soit dans une position qui autorise la fermeture du clapet ou au contraire dans une position qui interdit cette fermeture du clapet.

La sonde a, bien entendu, une section suffisamment forte pour résister sans flambage à la poussée qu'elle doit exercer sur le clapet mais aussi suffisamment faible pour assurer au fluide une section de passage convenable.

Etant donné la différence importante entre le diamètre interne du manchon et le diamètre externe de la partie extrême de la sonde qui en résulte, cette partie extrême de la sonde ne peut être directement guidée en translation par le manchon.

Or, la longueur de la sonde exige un moyen de positionnement précis.

Des organes de positionnement d'une tige dans un alésage sont connus à ce jour.

Ceux du type communément dénommés anneaux élastiques ou circlips ne forment qu'une butée axiale et n'assurent qu'une fonction de positionnement au long de l'axe mais ne peuvent convenir pour un positionnement précis dans un plan radial à cet axe ni pour un guidage en translation dans cette position.

Un tel anneau élastique a globalement la forme d'une rondelle fendue radialement pour être élastiquement déformable et pouvoir ainsi prendre place par son bord externe ou interne dans une gorge respectivement d'un manchon et d'une tige ou d'un arbre et, aprés cette mise en place, seule travaille au moins l'une de ses faces radiales, son autre bord interne ou externe, généralement, de forme non régulière demeurant libre.

On connaît également (FR-A-2.005.994) des anneaux élastiques ayant la forme de rondelles larges aptes, de ce fait, à obturer l'espace entre un manchon et une tige mais ne suffirait pas à résoudre le problème du guidage dans un appareil de robinetterie car la rondelle bien que fendue viendrait alors s'opposer de manière substantielle à l'écoulement.

On connaît, par exemple, un anneau élastique (DE-A-1.400.862) utilisé comme segment racleur sur un piston et assurant ainsi une parfaite étanchéité entre le piston et l'alésage.

Au lieu d'un tel anneau élastique en forme de rondelle fendue plus ou moins large, on connaît également (FR-A-2.014.426) des organes élastiques formés à partir d'un tronçon de fil d'acier.

Outre le manque de stabilité de cet anneau, on déplore généralement une déformation assymétrique de l'anneau en fonction de son ouverture et, de ce fait, cet anneau ne peut aisément convenir pour un positionnement précis d'une tige dans un manchon ni surtout pour assurer un guidage en translation.

Dans un tout autre domaine, on connaît un dispositif de fixation (GB-A-823.033) réalisé à partir d'un fil définissant une membrure interne et une membrure externe qui permet de maintenir un couvercle sur l'ouie d'une sonnerie de téléphone.

Pour cela, le couvercle est rivé sur un anneau interne que comporte le dispositif de fixation.

Le maintien élastique du couvercle résulte de l'inclinaison de la membrure externe par rapport à la membrure interne, cette membrure externe ne s'appuyant pas dans une gorge d'un alésage.

Un des résultats que l'invention vise à obtenir est un organe de positionnement du type précité qui soit apte à assurer une telle précision de positionnement et puisse assurer le guidage en translation de la tige.

A cet effet, elle a pour objet un tel organe notamment caractérisé en ce que :
- d'une part, au lieu d'un anneau élastique en forme de rondelle fendue, l'organe est formé à partir d'un tronçon d'élément allongé conformé de manière à former distinctement un anneau ouvert externe coopérant avec le manchon et des moyens internes coopérant avec la tige et
- d'autre part, l'élément allongé se présente sous la forme d'une bande large dont la largeur est disposée dans le sens de l'épaisseur de l'organe de positionnement pour assurer un bon guidage de la tige.

Elle a également pour objet l'appareil dont au moins une tige est positionnée dans un logement cylindrique par un tel organe.

Elle sera bien comprise à l'aide de la description ci-aprés faite à titre d'exemple non limitatif en regard du dessin ci-annexé qui représente schématiquement :
- figure 1 : un appareil de robinetterie dont la tige de commande est guidée par un organe de positionnement selon l'invention,

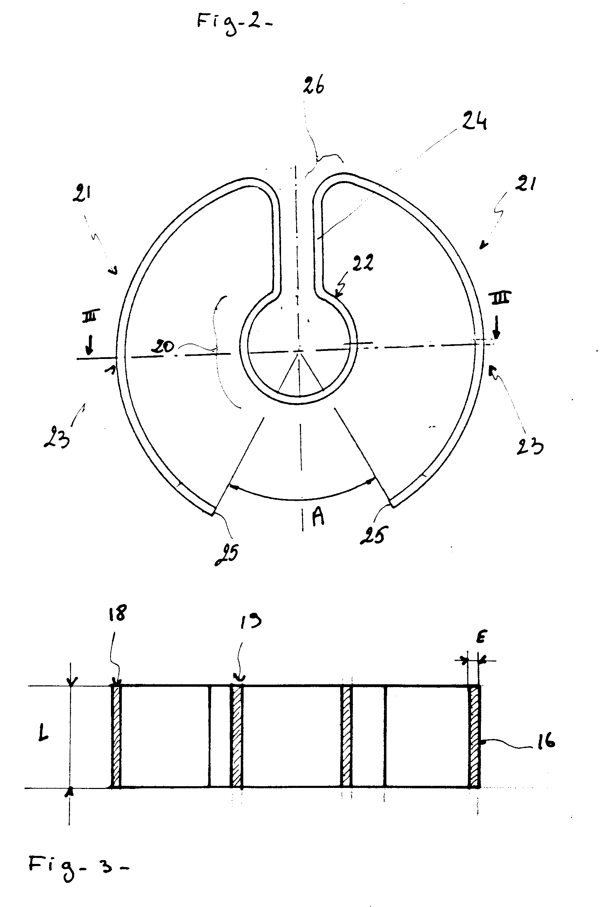

- figure 2 : l'organe vu de face,
- figure 3 : une coupe selon III-III de la figure 2.

En se reportant au dessin, on voit que l'appareil de robinetterie 1 comprend un corps 2 abritant une chambre 3 dans laquelle débouchent au moins trois manchons 4 à 6 dont deux manchons reliés l'un 4 à l'entrée 7 et l'autre 5 à la sortie 8 du fluide et un troisième manchon 6 logeant des moyens 10 de tarage et de commande d'un clapet 11 qui, pour contrôler la circulation du fluide entre la chambre 3 et l'un 4 des manchons respectivement d'entrée 4 et de sortie 5, se déplace sensiblement parallèlement à un siège 12 porté par le corps 2 à l'extrémité interne du manchon 4 ou 5 correspondant.

Pour sa commande, on voit que le robinet comprend également une sonde thermostatique 13 ayant la forme d'une tige dont une partie extrême 14 pénètre dans le corps 2 par le dit manchon 4 ou 5.

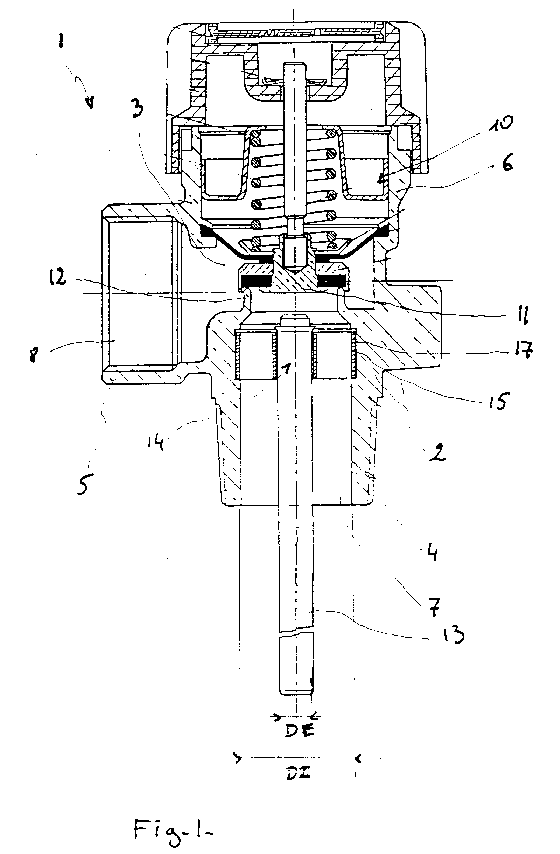

Selon la température détectée par la sonde 13, cette sonde 13 a son extrémité 14 qui vient dans une position (figure 1) qui autorise la fermeture du clapet 11 ou, au contraire, dans une position (non représentée) qui interdit cette fermeture du clapet 11.

La sonde 13 a, bien entendu, une section suffisamment forte pour résister sans flambage à la poussée qu'elle doit exercer sur le clapet 11 mais aussi suffisamment faible pour laisser au fluide une section de passage convenable.

Etant donné la différence importante qui en résulte entre le diamètre interne DI du manchon 4 ou 5 et le diamètre externe DE de la partie extrême 14 de la sonde 13, cette partie extrême 14 de la sonde 13 ne peut être directement guidée en translation par le manchon 4 ou 5.

Aussi, la longueur de la sonde 13 exigeant un tel positionnement, l'appareil comprend un organe de positionnement 15 qui, à la manière de ceux du type communément dénommés anneaux élastiques ou circlips, a extérieurement globalement la forme d'un anneau fendu pour être élastiquement déformable et pouvoir ainsi prendre place par son bord externe 16 dans une gorge 17 du manchon 4 ou 5.

Selon une caractéristique essentielle de l'invention :
- d'une part, au lieu d'un anneau élastique en forme de rondelle fendue, l'organe est formé à partir d'un tronçon d'élément allongé conformé de manière à former distinctement un anneau ouvert externe 18 coopérant avec le manchon 4 ou 5 et des moyens internes 19 coopérant avec la tige 13 et
- d'autre part, l'élément allongé se présente sous la forme d'une bande large dont la largeur L est disposée dans le sens de l'épaisseur de l'organe de positionnement pour assurer un bon guidage de la tige.

Dans une forme préférée de réalisation, c'est la partie médiane 20 de cet élément allongé qui est conformé de manière à réaliser les moyens internes 19 coopérant avec la tige 13 et cette conformation consiste en un anneau ouvert 19 interne ceinturant la tige 13 et ce sont donc les parties extrêmes 21 de l'élément allongé qui, tout d'abord, chacune à partir d'un des bords 22 de l'ouverture de l'anneau interne s'étendent vers l'extérieur sensiblement parallèlement entre elles et dans une direction sensiblement radiale jusqu'à proximité de l'anneau ouvert 18 externe où ces parties extrêmes divergent et se poursuivent en forme sensiblement semi-circulaire pour matérialiser deux zones 23 diamétralement opposées de l'anneau 18 ouvert externe, les faces extrêmes 25 de l'élément allongé restant écarter l'une de l'autre d'une certaine distance.

Grâce à cette conformation de l'élément allongé, la déformation de l'anneau externe s'opère symétriquement sans donc désaxer de manière significative l'anneau 19 interne.

Quant à l'anneau interne 19, il ne subit pratiquement pas cette déformation qui est pour l'essentiel absorbée par les branches radiales.

La distance entre les zones des parties extrêmes qui sont disposées au moins sensiblement radialement et ci-aprés dites branches radiales 24 est au moins légèrement supérieure à la différence de diamètre entre le diamètre du manchon et le diamètre à fond de gorge qui, dans ce manchon de l'alésage, reçoit l'anneau externe.

L'angle A au centre entre les faces extrêmes de l'élément allongé a, par exemple, une valeur de l'ordre de 60°.

A contrario, cet élément allongé a une épaisseur E trés faible, par exemple, équivalente à la profondeur de la gorge qui reçoit l'anneau externe.

Cette faible épaisseur, par exemple, de huit dixième de millimètres facilite sa mise en forme et permet de ne pas, aprés montage, réduire la section de passage du manchon de manière significative.

Les branches radiales 24 seront avantageusement reliées aux parties semi-circulaires par de larges arrondis 26 par exemple d'environ un millimètre cinq.

Cet élément allongé sera, par exemple, réalisé en matériau élastique compatible avec le fluide circulant dans le manchon et, par exemple, en acier inoxydable.

## Revendications

1. Organe (15) de positionnement réciproque dans un appareil (1) d'une tige (13) et d'un logement cylindrique,
cet organe de positionnement qui, à la manière de ceux du type communément dénommés anneaux élastiques, a extérieurement globalement la forme d'un anneau fendu pour être élastiquement déformable et pouvoir ainsi prendre place par son bord externe (16) dans une gorge (17) du manchon (4 ou 5),
cet organe de positionnement étant **CARACTERISE** en ce que :
- d'une part, au lieu d'un anneau élastique en forme de rondelle fendue, l'organe est formé à partir d'un tronçon d'élément allongé conformé de manière à former distinctement un anneau ouvert externe (18) coopérant avec le manchon (4 ou 5) et des moyens internes (19) coopérant avec la tige (13), et
- d'autre part, l'élément allongé se présente sous la forme d'une bande large dont la largeur L est disposée dans le sens de l'épaisseur de l'organe de positionnement pour assurer un bon guidage de la tige.

2. Organe de positionnement selon la revendication 1 **caractérisé** en ce que c'est la partie médiane (20) de cet élément allongé qui est conformé de manière à réaliser les moyens internes (19) coopérant avec la tige (13) et cette conformation consiste en un anneau ouvert (19) interne ceinturant la tige (13) et ce sont donc les parties extrêmes (21) de l'élément allongé qui, tout d'abord, chacune à partir d'un des bords (22) de l'ouverture de l'anneau interne s'étendent vers l'extérieur sensiblement parallèlement entre elles et dans une direction sensiblement radiale jusqu'à proximité de l'anneau ouvert 18 externe où ces parties extrêmes divergent et se poursuivent en forme sensiblement semi-circulaire pour matérialiser deux zones (23) diamétralement opposées de l'anneau (18) ouvert externe, les faces extrêmes (25) de l'élément allongé restant écarter l'une de l'autre d'une certaine distance.

3. Organe de positionnement selon la revendication 2 **caractérisé** en ce que la distance entre les zones des parties extrêmes qui sont disposées au moins sensiblement radialement et ci-aprés dites branches radiales (24) est au moins légèrement supérieure à la différence de diamètre entre le diamètre du manchon et le diamètre à fond de gorge qui, dans ce manchon de l'alésage, reçoit l'anneau externe.

4. Organe de positionnement selon la revendication 3 **caractérisé** en ce que l'angle (A) au centre entre les faces extrêmes (25) de l'élément allongé a une valeur de l'ordre de 60°.

5. Organe de positionnement selon l'une quelconque des revendications 1 à 4 **caractérisé** en ce que l'élément allongé a une épaisseur (E) trés faible.

6. Organe de positionnement selon la revendication 5 **caractérisé** en ce que l'épaisseur (E) est équivalente à la profondeur de la gorge qui reçoit l'anneau externe.

7. Organe de positionnement selon l'une quelconque des revendications 1 à 6 **caractérisé** en ce que les branches radiales (24) sont avantageusement reliées aux parties semi-circulaires par de larges arrondis (26).

8. Appareil **caractérisé** en ce qu'au moins une tige est positionnée par rapport à un logement cylindrique à l'aide d'un organe selon l'une quelconque des revendications 1 à 7.
